# EUROPEAN PATENT SPECIFICATION

(11) **EP 1 489 630 B1**
(45) Date of publication and mention of the grant of the patent: **14.12.2011**
(21) Application number: 02747668.8
(22) Date of filing: 15.07.2002
(51) Int. Cl.: H01B 13/00, C01B 31/02, H01G 9/058

(54) **CONDUCTIVE MATERIAL USING CARBON NANO-TUBE AND MANUFACTURING METHOD THEREOF**
LEITFÄHIGES MATERIAL MIT KOHLENSTOFF-NANORÖHRE UND HERSTELLUNGSVERFAHREN DAFÜR
MATERIAU CONDUCTEUR DANS LEQUEL EST UTILISE UN NANOTUBE DE CARBONE ET PROCEDE DE FABRICATION

(30) Priority: 27.02.2002 JP 2002051391; 07.05.2002 JP 2002131651; 27.05.2002 JP 2002152221
(43) Date of publication of application: 22.12.2004
(73) Proprietor: Hitachi Zosen Corporation, Osaka-shi, Osaka 559-8559 (JP); Nakayama, Yoshikazu, Hirakata-shi, Osaka 573-0084 (JP)
(72) Inventor: NAKAYAMA, Yoshikazu, Hirakata-shi, Osaka 573-0084 (JP); INAZUMI, Chikashi, c/o HITACHI ZOSEN CORPORATION, Osaka-shi, Osaka 559-8559 (JP); SHIOZAKI, Hideki, c/o HITACHI ZOSEN CORPORATION, Osaka-shi, Osaka 559-8559 (JP); FUJITA, Daisuke, c/o HITACHI ZOSEN CORPORATION, Osaka-shi, Osaka559-8559 (JP)
(74) Representative: Merkle, Gebhard
(86) International application number: PCT/JP2002/007152
(87) International publication number: WO 2003/073440

(56) References cited:
- EP-A2- 0 913 508
- WO-A1-01/75912
- WO-A2-02/11971
- JP-A- 10 321 482
- JP-A- 11 139 815
- JP-A- 2000 124 079

## Description

### TECHNICAL FIELD

The present invention relates to an electrically conductive material comprising carbon nanotubes and a process for producing the same. The conductive material of the invention is usable, for example, for electrodes which are the main components of electric double layer capacitors having a great capacity to store electricity. The present invention further relates to an electrically conductive material comprising carbon nanotubes resembling elongated bristles of a brush and having high linearity and a great value as carbon nanotubes for use as fuel cell electrodes, environment cleaning catalytic materials, electron sources, electronic materials, probe explorers and gas storage materials, and a process for producing the material.

### BACKGROUND ART

Conventional electric double layer capacitors include a capacitor element which comprises a pair of polarizable electrodes each prepared by forming a polarizable electrode layer mainly of activated carbon over a current collector, and a separator made of a polypropylene nonwoven fabric or the like and interposed between the electrodes. With the electrode layers impregnated with an electrolyte, the capacitor element is placed into a metal container, which is then sealed off with a seal plate and a gasket to fabricate the capacitor. Such electric double layer capacitors of small size have been used chiefly in backup systems for IC memories.

Electric double layer capacitors of the stacked layer type have also been proposed which include positive electrodes and negative electrodes each in the form of a flat plate and comprising a current collector and an activated carbon-base electrode layer formed thereon, and which are fabricated by alternately arranging the positive and negative electrodes into stacked layers with a separator interposed between the two kinds of electrodes, placing the stacked assembly into a case, and injecting an electrolyte into the case to impregnate the electrode layers therewith (the publication of JP-A No. 4-154106, etc.). The capacitors of this type are generally intended for use involving great current or a great capacity.

The polarizable electrodes constituting these electric double layer capacitors conventionally consist mainly of activated carbon having a large specific surface area. Further used for the electrolyte is a polar solvent of high dielectric constant, such as water or a carbonic acid ester, so as to dissolve an electrolytic substance at a high concentration.

As disclosed in the publication of JP-A No. 2001-220674, carbon nanotubes resembling the bristles of a brush have been produced by forming a catalyst layer comprising Fe on a smooth-surfaced substrate, heating the substrate to a temperature of about 700° C and thereafter passing acetylene gas through the catalyst layer.

However, activated carbon of great specific surface area is generally low in electric conductivity, and the use of activated carbon only imparts increased internal resistance to the polarizable electrode, which in turn fails to deliver great current. Accordingly, an attempt has also been made to obtain an increased capacity by incorporating carbon nanotubes into the polarizable electrode and thereby giving an increased electric conductivity in order to lower the internal resistance (the publication of JP-A No. 2000-124079). The increased capacity achieved by this method is nevertheless limited to about 1.7 times the conventional level.

The conventional electric double layer capacitor further requires a separator of PTFE or the like to completely prevent ohmic contact between the positive and negative electrodes and not to impede the passage of ions, whereas the capacitor has the problem that the material and shape of the separator exert a great influence on the self-discharge characteristics and internal resistance of the electric double layer.

On the other hand, it has been desired to realize an electric double layer capacitor of greater capacity for use in packing up IC memories for a longer period of time.

The present inventors have made great efforts in order to develop electric double layer capacitors having a small size and yet a great capacity to store electricity and have already accomplished an invention of electric double layer capacitor with use of bristle-like carbon nanotubes and filed a patent application (Japanese Patent Application No. 2002-31148).

However, the invention uses the chemical vapor deposition process (CVD process) in an atmosphere of at least 600° C for producing carbon nanotube electrodes, so that the process requires use of a substrate of metal, glass or like heat-resistant material, which therefore results in a high product cost. Thus, the process has the problem of being unsuited to quantity production.

WO 02/11971 A2 discloses fiber-reinforced polymer matrix composites with anisotropic properties which are produced by extruding a mixture of very short fibers and a polymer through a die having a surface to volume ratio of at least about 10 in⁻¹. WO 01/75912 A1 discloses an induction winding containing at least one turn of current-carrying means that includes at least one electric conductor comprising nanostructures.

An object of the present invention is to provide an electrically conductive carbon nanotube material which is suited to quantity production, advantageous in cost and excellent in linearity, and a process for producing the material.

### DISCLOSURE OF THE INVENTION

The present inventors have conducted intensive research to overcome the foregoing problems and consequently found a process for producing an electrically conductive carbon nanotube material by implanting carbon nanotubes in an electrically conductive film in the form of bristles of a brush by the application of the transfer method for the production of the material.

Stated more specifically, the process of the present invention for producing an electrically conductive material is characterized in that carbon nanotubes grown using catalyst particles on a substrate as nuclei are transferred onto an electrically conductive film.

The term "film" as used herein includes a film of large thickness which is usually termed a "sheet" in addition to a film in the narrow sense of the word, as defined based on the thickness thereof.

Carbon nanotubes are transferred onto the conductive film preferably substantially perpendicular to the surface of the film.

In transferring carbon nanotubes, it is desirable to give the conductive film a temperature not lower than the softening temperature of the film to below the melting temperature thereof.

The conductive film having the carbon nanotubes transferred thereto is cooled preferably to below the softening temperature of the film after the transfer.

The process of the present invention for producing a conductive material comprising carbon nanotubes can be practiced also continuously.

The carbon nanotube is a very fine tubular substance comprising carbon atoms as linked into a reticular structure and having a bore diameter of nanometer size (1 nano is one billionth). Since usual electrolytes are about 0.4 to about 0.6 nm in electrolytic ion diameter, carbon nanotubes having a bore diameter of 1 to 2 nm are desirable for the adsorption and desorption of ions.

Carbon nanotubes resembling bristles of a brush can be produced by known processes. For example, carbon nanotubes, 12 to 38 nm in diameter and having a multilayer structure, are formed on a substrate perpendicular thereto by applying a solution containing a complex of a metal such as nickel, cobalt or iron to at least one surface of the substrate by a spray or brush, thereafter heating the substrate to form a coating thereon, or forcing the solution against the substrate surface by a cluster gun to form a coating thereon, and subjecting the coating to the common chemical vapor deposition process (CVD process) using acetylene (C₂H₂) gas.

The present invention is practiced in the mode to be described below.

First, catalyst particles are formed on a substrate to grow carbon nanotubes from a material gas in a high-temperature atmosphere, with the catalyst particles serving as nuclei. Any substrate is usable insofar as the particulate catalyst is supportable thereon. The substrate is preferably one which is less likely to wet the catalyst particles, and may be a silicon substrate. The catalyst particles may be particles of a metal such as nickel, cobalt, iron or the like. A solution of such a metal or a complex or like compound thereof is applied by spraying or brushing to the substrate, or is forced against the substrate by a cluster gun, dried, and heated when required to form a coating. The coating is preferably 1 to 100 nm in thickness since too large a thickness encounters difficulty in making the coating into particles by heating. The coating is then heated preferably at a reduced pressure or in a nonoxidizing atmosphere preferably to 650 to 800° C, whereby catalyst particles are produced which are about 1 to about 50 nm in diameter. Examples of material gases usable are acetylene, methane, ethylene and like aliphatic hydrocarbons, among which acetylene is especially preferable. Use of acetylene produces carbon nanotubes having a multilayer structure and a thickness of 12 to 38 nm on the substrate, in the form of the bristles of a brush with the catalyst particles serving as nuclei. The temperature for forming carbon nanotubes is preferably 650 to 800° C.

The bristle-like carbon nanotubes grown in this way are transferred onto an electrically conductive film. For the transfer, the conductive film is given a temperature not lower than the softening temperature of the film to below the melting temperature thereof. This makes it easy to orient the carbon nanotubes in a direction perpendicular to the conductive film. The carbon nanotubes can be fixed to the conductive film by cooling the film to a temperature below the softening temperature after the transfer. The conductive film to be used is one serviceable as a current collector. Examples of conductive films usable are those generally available commercially, such as CF48, product of Toray Industries, Inc. [components: PET/ITO (Indium Tin Oxide)/Pd], 300R (#125), product of Toyobo Co., Ltd., etc. The conductive film is preferably 0.01 to 1 mm, more preferably 0.05 to 0.5 mm, in thickness.

These steps (i.e., application of the catalyst to the substrate, formation of the particulate catalyst, growth of the bristle-like carbon nanotubes by the CVD process, transfer of the carbon nanotubes onto the conductive film, subsequent cooling of the film) can be performed in sequence.

Using the bristle-like carbon nanotube electrode obtained by the process of the present invention, an electric double layer capacitor is fabricated, for example, by arranging two electrodes face-to-face with the carbon nanotubes of one of the electrodes opposed to the carbon nanotubes of the other electrode, impregnating the electrodes with an electrolyte and placing the electrodes into a container.

Each of the carbon nanotubes may have a single layer or a multiplicity of layers, i.e., a plurality of concentric tubular walls which are different in diameter. The carbon nanotube is preferably 1 to 100 nm in diameter.

The preparation of bristle-like carbon nanotubes by the CVD process requires a catalyst of a metal such as iron serving as seed crystals. Since carbon nanotubes are grown on the catalyst, the adhesion between the substrate and the carbon nanotubes is weak, while in the case where carbon nanotube material is used for capacitors, it is likely that the nanotube material will peel off the substrate during use since the nanotubes are impregnated with an alkali or like electrolyte. Furthermore, bristle-like carbon nanotubes are low in linearity because they grow while intertwining with one another. Although the publication of JP-A No. 10-203810 discloses, for example, a method of orienting carbon nanotubes perpendicular to the substrate by d.c. grow discharge, this method is commercially infeasible. Furthermore, the mass of carbon nanotubes resembling the bristles of a brush has an outer end face which is not horizontal and involves irregularities due to the indentation or projection of individual outer tube ends.

The above problems can be obviated by giving the conductive film a temperature of 70 to 140° C, preferably 80 to 120° C, when the carbon nanotubes grown on the substrate are to be implanted in the film by the transfer step and by giving the film a temperature of 50 to 0° C, preferably 35 to 0° C, when the substrate is to be removed from the nanotubes as implanted in the film. Preferably, the conductive film is a multilayer film including at least a polyethylene layer and a layer supporting this layer. Preferably, the layer supporting the polyethylene layer comprises a heat-resistant film. The heat-resistant film is preferably a polyethylene terephthalate film.

The conductive film may be a polyethylene film which is given electric conductivity by incorporating therein about 1 to about 30 wt. % of carbon nanotube pieces. The conductive carbon nanotube material obtained with use of the film incorporating carbon nanotube pieces has the advantage of being excellent in corrosion resistance to acids and alkalis because the conductive film is free from ITO (Indium Tin Oxide) and metals such as Ag and Cu. The conductive film may be a porous conductive film comprising a polyethylene layer having a metal layer, for example, of ITO, Ag, Cu or the like on the transfer surface and provided with numerous through holes. The conductive carbon nanotube material obtained with use of the porous conductive film readily permits diffusion of gases, exhibiting outstanding characteristics when used as an environment cleaning catalyst material. The conductive film may be a film having numerous through holes formed therein and comprising a polyethylene film which is given electric conductivity by incorporating therein about 1 to about 30 wt. % of carbon nanotube pieces. The conductive carbon nanotube material obtained with use of this porous conductive film readily permits diffusion of gases, exhibiting outstanding characteristics when used as an environment cleaning catalyst material, and has the advantage of being excellent in corrosion resistance to acids and alkalis because the conductive film is free from ITO and metals such as Ag and Cu.

### BRIEF DESCRIPTION OF THE DRAWINGS

FIG. 1 is a diagram showing a process for continuously producing a carbon nanotube electrode.
FIG. 2 is a sectional view showing the layered structure of a conductive multilayer film.
FIG. 3 is an electron photomicrograph (× 500) of a carbon nanotube electrode obtained in Example 3 after transfer.
FIG. 4 is a sectional view showing the structure of a conductive film.
FIG. 5 is a sectional view showing the structure of a conductive film.
FIG. 6 is a sectional view showing the structure of a conductive film.

### BEST MODE OF CARRYING OUT THE INVENTION

Next, the present invention will be described in detail with reference to Examples.

### Example 1

### [First Step]

A solution of Fe complex was splayed onto a low-resistance N-type semiconductor silicon substrate, 0.5 mm in thickness, and the substrate was heated at 220° C to form an iron coating.

### [Second Step]

The iron coating on the substrate was placed into a CVD apparatus. Acetylene serving as a material for carbon nanotubes was introduced into the CVD apparatus at a flow rate of 30 ml/min at a temperature of about 720° C for 15 minutes. When thus heated, the iron coating was made into particles, and bristle-like carbon nanotubes were produced and gradually grown, with the resulting catalyst particles serving as nuclei. The carbon nanotubes grown had a multilayer structure and were 12 nm in thickness and 50 µm in length.

### [Third Step]

The bristle-like carbon nanotubes obtained were pressed at their outer ends against a conductive film (CF48, product of Toray Industries, Inc.) having a thickness of 0.2 mm and heated to a temperature not lower than the softening temperature of the film to below the melting temperature thereof (e.g., 100 to 300° C), whereby the carbon nanotubes were transferred to the conductive film substantially perpendicular to the film surface.

### [Fourth Step]

The conductive film having the bristle-like carbon nanotubes implanted therein by the transfer was cooled to below the softening temperature of the film, whereby a carbon nanotube electrode was obtained.

### Example 2

This example shows a process for producing a carbon nanotube electrode by performing the steps of Example 1 continuously.

### [First Step]

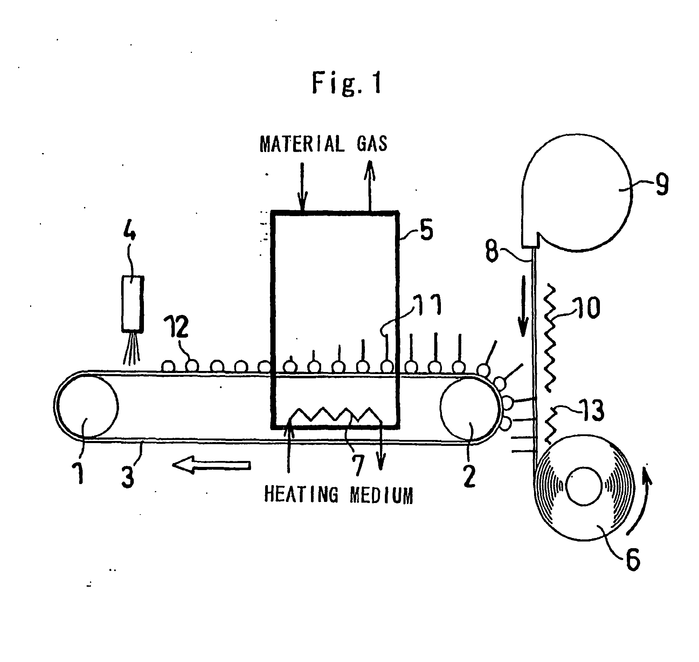

FIG. 1 shows an endless belt 3 (comprising a low-resistance N-type silicon substrate having a thickness of 0.5 mm) which was driven at a feed speed of 12 m/h by a drive drum 1 and a driven drum 2. A solution of Fe complex was applied to the upper surface of the endless belt 3 by a spray 4 in a catalyst deposition zone at an upper-side upstream portion of the belt 3 and thereafter heated to 220° C, whereby catalyst particles 12 were formed as scattered at a spacing of 100 nm on the belt 3.

### [Second Step]

The catalyst particles 12 on the endless belt 3 were transported to a CVD zone downstream from the catalyst deposition zone. The CVD zone comprised a heating furnace 5 having a length of about 2 m in the direction of movement of the belt, and a heater 7 disposed inside the furnace 5 under the belt 3. Acetylene gas serving as a material gas for carbon nanotubes was introduced into the furnace 5 of the CVD zone through a furnace top portion at a flow rate of 30 ml/min, and the catalyst particles 12 on the belt 3 were heated at a temperature of about 720° C from below by the heater 7 having a heating medium circulating therethrough. The time taken for each catalyst particle to pass through the heating furnace 5 was 15 minutes. As the catalyst particles 12 traveled inside the furnace 5, bristle-like carbon nanotubes 11 were produced on the catalyst particles serving as nuclei and extended upward. The carbon nanotubes grown had a multiplayer structure and were 12 nm in thickness and 50 µm in length.

### [Third Step]

When the carbon nanotubes 11 on the respective catalyst particles 12 on the belt 3 gradually fell down to a horizontal position while moving around the driven drum 2 after traveling from the CVD zone to the location of the driven drum 2, i.e., to a transfer zone, with the movement of the belt, the carbon nanotubes 11 had their outer ends pressed against a conductive film 8 having a thickness of 0.2 mm. The conductive film 8 (CF48, product of Toray Industries, Inc.) was sent out from a film feeder 9 downward and heated by a heater 10 to a temperature not lower than the softening temperature of the film to below the melting temperature thereof (e.g., 100 to 300° C). The carbon nanotubes 11 were transferred from the catalyst particles 12 to the conductive film 8 substantially perpendicular to the film surface by being pressed against the conductive film 8 in this way.

### [Fourth Step]

The conductive film 8 having the bristle-like carbon nanotubes implanted therein by the transfer was cooled to a temperature (e.g., room temperature) below the softening temperature of the film by a cooler 13 provided below the heater 10. The carbon nanotube electrode thus obtained was wound up on a take-up drum 6.

### Example 3

### [First step]

The same procedure as in Example 1 was performed.

### [Second step]

The same procedure as in Example 1 was performed.

### [Third Step]

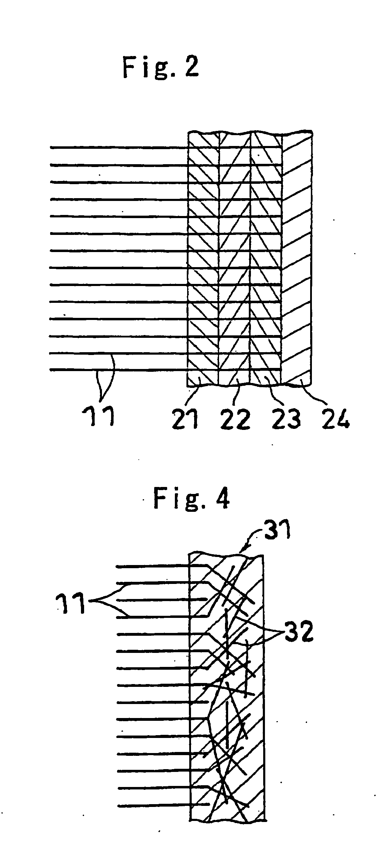

The bristle-like carbon nanotubes 11 formed on the 0.5-mm-thick low-resistance N-type semiconductor silicon substrate by the second step were pressed at their outer ends against a conductive multilayer film heated at 95° C, whereby the carbon nanotubes were implanted in the conductive film substantially perpendicular to the film surface. With reference to FIG. 2, the conductive multilayer film comprises, as arranged from the transfer side toward the other side, an ITO (Indium Tin Oxide) layer 21 having a thickness of 0.01 to 0.03 µm, a primer layer 22 having a thickness of 0.05 to 0.5 µm, a polyethylene layer 23 having a thickness of 20 to 50 µm and a polyethylene terephthalate layer 24 having a thickness of 50 to 180 µm. The polyethylene layer may comprise other heat-resistant film.

### [Fourth Step]

The conductive film having the carbon nanotubes implanted therein is then cooled to 25° C, and the N-type semiconductor silicon substrate was thereafter removed from the nanotubes with the conductive film left fixed thereto. A carbon nanotube electrode was obtained by transferring the carbon nanotubes from the substrate to the conductive film in this way.

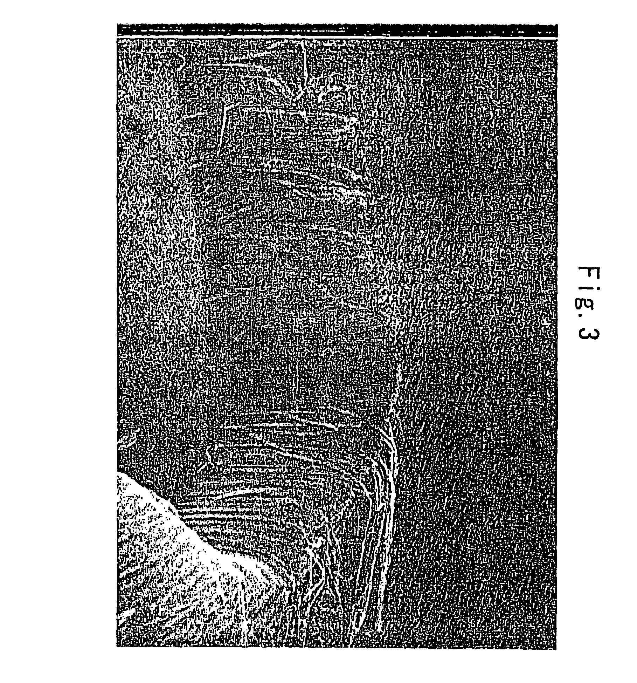

The carbon nanotubes of the electrode, as grown on the silicon substrate (i.e., before the transfer), were 10 to 20 nm in diameter and 10 to 50 µm in length, whereas the nanotubes were found elongated to about 120 µm in length after the transfer and perpendicular to the film. This appears attributable to a great adhesion of the nanotubes to the film and to a tensile force exerted on the carbon nanotubes and acting to stretch the tubes to about 2.4 times the original length when the silicon substrate was removed in the fourth step. FIG. 3 is an electron photomicrograph (×500) of the carbon nanotube electrode after the transfer.

### Example 4

The same procedure as in Example 3 was repeated except that in the transfer step, the temperature of the conductive film was altered as listed in Table 1 when the carbon nanotubes grown on the substrate were implanted in the conductive film and also when the substrate was removed from the carbon nanotubes as implanted in the film.

The carbon nanotube electrode obtained were evaluated with respect to the transfer efficiency, perpendicularity and adhesion. Table 1 collectively shows the results.

**Table 1**

| Condition | Implanting temp. (°C) | Removal temp. (°C) | Results of evaluation | | | |
|---|---|---|---|---|---|---|
| | | | Transfer efficiency | Perpendicularity | Adhesion | Overall Evaluation |
| A | 95 | 30 | ⊚ | ⊚ | ⊚ | Good |
| B | 50 | 30 | × | - | - | No transfer |
| C | 70 | 30 | Δ | Δ | Δ | |
| D | 80 | 30 | ○ | ○ | ○ | |
| E | 90 | 30 | ⊚ | ⊚ | ⊚ | Good |
| F | 100 | 30 | ⊚ | ⊚ | ⊚ | Good |
| G | 110 | 30 | ○ | ○ | ⊚ | |
| H | 120 | 30 | ○ | ○ | ⊚ | |
| I | 130 | 30 | ○ | Δ | ⊚ | |
| J | 140 | 30 | ○ | Δ | ⊚ | |
| K | 150 | 30 | × | - | - | PE* layer separation |
| L | 160 | 30 | × | - | - | PE layer separation |
| M | 95 | 40 | ○ | ○ | ○ | |
| N | 95 | 50 | Δ | Δ | Δ | |
| O | 95 | 60 | × | - | - | No transfer |

| | | | | | | |
|---|---|---|---|---|---|---|
| *PE: polyethylene With reference to Table 1, ⊚ stands for "good," ○ for about 80%, Δ for about 50%, and × for "poor." | | | | | | |

Table 1 reveals that conductive carbon nanotube materials can be obtained wherein the carbon nanotubes are satisfactorily adhered to the film without separation, are excellent in linearity and have their outer ends positioned along a horizontal plane without indentation or projection, when the conductive film is given a temperature of 70 to 140° C for transferring the nanotubes grown on the substrate to the conductive film and when the film is given a temperature of 50 to 0° C for removing the substrate from the carbon nanotubes as implanted in the film.

### Example 5

### [First Step]

The same procedure as in Example 1 was performed.

### [Second Step]

The same procedure as in Example 1 was performed.

### [Third Step]

With reference to FIG. 4, the bristle-like carbon nanotubes 11 formed on the 0.5-mm-thick low-resistance N-type semiconductor silicon substrate by the second step had their outer ends pressed against a conductive film 31 having a thickness of 0.2 mm and heated to 95° C, whereby the nanotubes were implanted in the film substantially perpendicular to the film surface. The conductive film 31 was a polyethylene film having incorporated therein about 15 wt.% of carbon nanotube pieces 32 and thereby given conductivity.

### [Fourth Step]

The conductive film having the carbon nanotubes implanted therein was then cooled to 25° C, and the silicon substrate was thereafter removed from the bristle-like carbon nanotubes as fixed to the tubes. A carbon nanotube electrode was obtained by transferring the carbon nanotubes from the substrate to the conductive film in this way.

The carbon nanotubes of the electrode, like those obtained in Example 3, were also found stretched to 120 µm from the length 50 µm of the tubes as grown on the silicon substrate and found perpendicular to the film. The carbon nanotube electrode obtained in this example has the advantage of being excellent in corrosion resistance to acids and alkalis since the conductive film is free from ITO, Ag, Cu or like metal.

### Example 6

### [First Step]

The same procedure as in Example 1 was performed.

### [Second Step]

The same procedure as in Example 1 was performed.

### [Third Step]

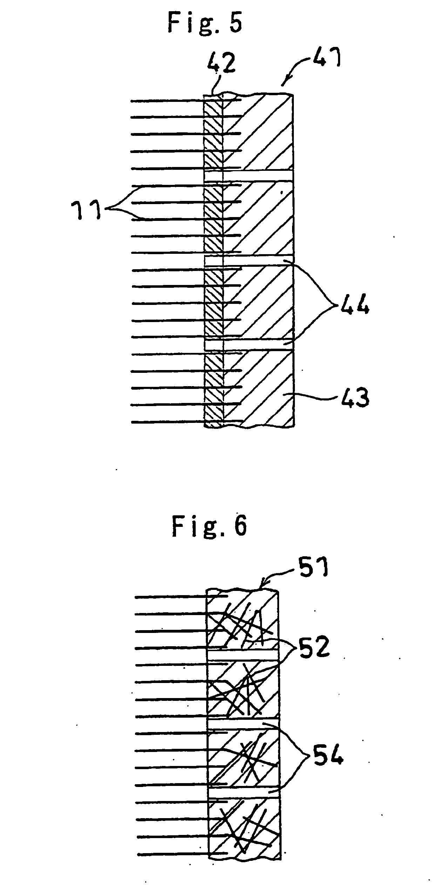

With reference to FIG. 5, the bristle-like carbon nanotubes 11 formed on the 0.5-mm-thick low-resistance N-type semiconductor silicon substrate by the second step had their outer ends pressed against a porous conductive film 41 having a thickness of 0.2 mm and heated to 95° C, whereby the nanotubes were implanted in the film substantially perpendicular to the film surface. The porous conductive film 41 comprised a polyethylene layer 43 having an ITO layer 42 over the transfer surface thereof and was provided with numerous through holes 44.

### [Fourth Step]

The porous conductive film having the carbon nanotubes implanted therein was then cooled to not higher than 30° C, and the silicon substrate was thereafter removed from the bristle-like carbon nanotubes as fixed to the film. A porous conductive carbon nanotube material was obtained by transferring the carbon nanotubes from the substrate to the porous conductive film in this way.

The carbon nanotubes of the conductive material, like those prepared in Example 3, were also found stretched to 120 µm from the length 50 µm of the tubes as grown on the silicon substrate and found perpendicular to the film.

The conductive carbon nanotube material obtained in this example readily permits diffusion of gases and exhibits excellent characteristics when used as an environment cleaning catalyst material since the conductive film is porous.

### Example 7

### [First Step]

The same procedure as in Example 1 was performed.

### [Second Step]

The same procedure as in Example 1 was performed.

### [Third Step]

With reference to FIG. 6, the bristle-like carbon nanotubes 11 formed on the 0.5-mm-thick low-resistance N-type semiconductor silicon substrate by the second step had their outer ends pressed against a porous conductive film 51 having a thickness of 0.2 mm and heated to 95° C, whereby the nanotubes were implanted in the film substantially perpendicular to the film surface. The porous conductive film 51 comprised a polyethylene film having incorporated therein about 15 wt.% of carbon nanotube pieces 52 and thereby given conductivity and had numerous through holes 54.

### [Fourth Step]

The conductive film having the carbon nanotubes implanted therein was then cooled to 30° C, and the silicon substrate was thereafter removed from the bristle-like carbon nanotubes as fixed to the film. A porous conductive carbon nanotube material was obtained by transferring the carbon nanotubes from the substrate to the porous conductive film in this way.

The carbon nanotubes of the conductive material, like those prepared in Example 3, were also found stretched to 120 µm from the length 50 µm of the tubes as grown on the silicon substrate and found perpendicular to the film.

The conductive carbon nanotube material obtained in this example readily permits diffusion of gases and exhibits excellent characteristics when used as an environment cleaning catalyst material since the conductive film is porous. The material also has the advantage of being excellent in corrosion resistance to acids and alkalis since the conductive film is free from ITO, Ag, Cu or like metal.

### INDUSTRIAL APPLICABILITY

The process of the invention for producing a carbon nanotube electrode is suited to quantity production and advantageous in cost.

## Claims

1. A process for producing an electrically conductive material comprising carbon nanotubes, the process being **characterized in that** carbon nanotubes grown using catalyst particles on a substrate as nuclei are transferred onto an electrically conductive film.

2. A process for producing an electrically conductive material according to claim 1 which is **characterized in that** the carbon nanotubes are transferred onto the conductive film substantially perpendicular to a surface of the film.

3. A process for producing an electrically conductive material according to claim 1 or 2 which is **characterized in that** the conductive film is given a temperature not lower than the softening temperature of the film to below the melting temperature thereof when the carbon nanotubes are to be transferred.

4. A process for producing an electrically conductive material according to any one of claims 1 to 3 which is **characterized in that** the conductive film is cooled to below the softening temperature thereof after the transfer.

5. A process for producing an electrically conductive material according to any one of claims 1 to 4 which is **characterized by** being practiced continuously.

6. An electrically conductive material comprising carbon nanotubes which is **characterized in that** the material is obtained by a process according to any one of claims 1 to 5.

7. An electrically conductive material according to
claim 6 which is **characterized in that** the material is an electrode.

## Patentansprüche

1. Verfahren zur Herstellung eines Kohlenstoff-Nanoröhrchen umfassenden, elektrisch leitfähigen Materials, wobei das Verfahren **dadurch gekennzeichnet ist, dass** Kohlenstoff-Nanoröhrchen, die unter Verwendung von Katalysatorteilchen auf einem Substrat als Keime aufgewachsen sind, auf einen elektrisch leitfähigen Film übertragen werden.

2. Verfahren zur Herstellung eines elektrisch leitfähigen Materials nach Anspruch 1, das **dadurch gekennzeichnet ist, dass** die Kohlenstoff-Nanoröhrchen auf den leitfähigen Film im wesentlichen senkrecht zu einer Oberfläche des Films übertragen werden.

3. Verfahren zur Herstellung eines elektrisch leitfähigen Materials nach Anspruch 1 oder 2, das **dadurch gekennzeichnet ist, dass** dem leitfähigen Film eine Temperatur verliehen wird, welche nicht niedriger ist als die Erweichungstemperatur des Films bis unterhalb dessen Schmelztemperatur, wenn die Kohlenstoff Nanoröhrchen zu übertragen sind.

4. Verfahren zur Herstellung eines elektrisch leitfähigen Materials nach mindestens einem der Ansprüche 1 bis 3, welches **dadurch gekennzeichnet ist, dass** nach der Übertragung der leitfähige Film auf unterhalb dessen Erweichungstemperatur gekühlt wird.

5. Verfahren zur Herstellung eines elektrisch leitfähigen Materials nach mindestens einem der Ansprüche 1 bis 4, welches **dadurch gekennzeichnet ist, dass** es kontinuierlich durchgeführt wird.

6. Elektrisch leitfähiges Material, umfassend Kohlenstoff-Nanoröhrchen, **dadurch gekennzeichnet, dass** das Material durch ein Verfahren gemäß mindestens einem der Ansprüche 1 bis 5 erhalten wird.

7. Elektrisch leitfähiges Material nach Anspruch 6, **dadurch gekennzeichnet, dass** das Material eine Elektrode ist.

## Revendications

1. Procédé de production d'un matériau électriquement conducteur comprenant des nanotubes de carbone, le procédé étant **caractérisé en ce que** des nanotubes de carbone dont la croissance s'effectue en utilisant des particules de catalyseur sur un substrat sous forme de noyaux sont transférés sur un film électriquement conducteur.

2. Procédé de production d'un matériau électriquement conducteur selon la revendication 1, qui est **caractérisé en ce que** les nanotubes de carbone sont transférés sur le film conducteur sensiblement perpendiculairement à une surface du film.

3. Procédé de production d'un matériau électriquement conducteur selon la revendication 1 ou 2, qui est **caractérisé en ce qu'**il est donné au film conducteur une température pas inférieure à la température de ramollissement du film inférieure à la température de fusion de celui-ci lorsque les nanotubes de carbone doivent être transférés.

4. Procédé de production d'un matériau électriquement conducteur selon l'une quelconque des revendications 1 à 3, qui est **caractérisé en ce que** le film conducteur est refroidi au-dessous de la température de ramollissement de celui-ci après le transfert.

5. Procédé de production d'un matériau électriquement conducteur selon l'une quelconque des revendications 1 à 4, qui est **caractérisé en ce qu'**il est mis en pratique de manière continue.

6. Matériau électriquement conducteur comprenant des nanotubes de carbone, qui est **caractérisé en ce que** le matériau est obtenu par un procédé selon l'une quelconque des revendications 1 à 5.

7. Matériau électriquement conducteur selon la revendication 6, qui est **caractérisé en ce que** le matériau est une électrode.
